# FASCICULE DE BREVET EUROPEEN

(11) **EP 4 273 527 B1**
(45) Date de publication et mention de la délivrance du brevet: **27.05.2026**
(21) Numéro de dépôt: 23168796.3
(22) Date de dépôt: 19.04.2023
(51) Int. Cl.: G01M 3/24

(54) **PROCÉDÉ ET DISPOSITIF PORTABLE DE DÉTECTION DE FUITE DANS UNE CANALISATION**
VERFAHREN UND TRAGBARE VORRICHTUNG ZUR ERKENNUNG VON LECKS IN EINER ROHRLEITUNG
METHOD AND PORTABLE DEVICE FOR DETECTING LEAKS IN A PIPELINE

(30) Priorité: 03.05.2022 FR 2204199
(43) Date de publication de la demande: 08.11.2023
(73) Titulaire: Alcom Technologies, 10600 Barberey St Sulpice (FR)
(72) Inventeur: GAUTIER, Fabrice, 33000 BORDEAUX (FR)
(74) Mandataire: Santarelli

(56) Documents cités:
- AU-A1- 2020 262 969
- CLARK CASEY ET AL: "Wireless leak detection using airborne ultrasonics and a fast-Bayesian tree search algorithm with technology demonstration on the ISS", 2015 IEEE INTERNATIONAL CONFERENCE ON WIRELESS FOR SPACE AND EXTREME ENVIRONMENTS (WISEE), IEEE, 14 December 2015 (2015-12-14), pages 1 - 5, XP032856612, DOI: 10.1109/WISEE.2015.7392983
- TOSHITAKA SATO, AKIRA MITA: "Leak detection using the pattern of sound signals in water supply systems", PROCEEDINGS VOLUME 6529, SENSORS AND SMART STRUCTURES TECHNOLOGIES FOR CIVIL, MECHANICAL, AND AEROSPACE SYSTEMS 2007, vol. 6529, 6 April 2007 (2007-04-06), San Diego, pages 1 - 9, XP093001481, ISSN: 0277-786X, ISBN: 978-1-5106-4548-6, Retrieved from the Internet <URL:http://dx.doi.org/10.1117/12.715486> [retrieved on 20221123], DOI: 10.1117/12.715486

## Description

### DOMAINE TECHNIQUE

La présente invention appartient au domaine des dispositifs de traitement du signal, notamment du signal acoustique émis lors d'une interaction fluide-structure, et concerne plus particulièrement un procédé de détection de fuite dans une canalisation conduisant un fluide quelconque et un dispositif portable pour la mise en œuvre d'un tel procédé.

La présente invention trouve une application directe, mais non exclusive, dans la détection de fuites dans un réseau d'eau potable.

### ÉTAT DE LA TECHNIQUE

Les canalisations, surtout celles d'alimentation sous pression telles que les conduites d'eau dans un réseau d'eau potable ou des conduites de fluides industriels dans les usines, sont susceptibles de défaillances diverses pouvant occasionner l'apparition de fuites.

Ces fuites compromettent le fonctionnement normal des canalisations et peuvent avoir de graves conséquences tant sur le plan technique que sur le plan économique et environnemental.

La détection de ces fuites se révèle souvent être une tâche ardue, notamment à cause de la difficulté d'accès aux canalisations parfois enterrées et de la taille de celles-ci.

Quelques solutions « artisanales » reposent sur l'analyse humaines du son émis par une canalisation et enregistré avec un microphone ou sondé avec un stéthoscope.

Ces solutions sont fastidieuses, peu précises et nécessitent l'intervention de techniciens ayant une grande expertise.

Le document US4309576 décrit un dispositif d'écoute pour localiser des fuites d'eau, comprenant une tige actionnée manuellement ayant une poignée à une extrémité pour le positionnement manuel du dispositif d'écoute. Un appareil de captation acoustique est monté à l'autre extrémité de la tige, et il comprend un transducteur de tonalité audio en céramique qui est connecté de manière opérationnelle à un amplificateur-récepteur qui possède un indicateur de niveau sur lequel des signaux de fuite visuels peuvent être vus. L'appareil de captation acoustique est également relié à un casque d'écoute pour permettre l'audition des fuites. Le transducteur comprend un diaphragme en laiton directement fixé à un goujon fileté pour le montage dans la tige.

Il existe des solutions dites invasives car nécessitent l'introduction d'un objet dans la canalisation pour opérer la détection de fuite.

On connait par exemple des méthodes utilisant une technologie de détection photonique qui transforme un câble en fibre optique passant le long d'un réseau de canalisations d'eau en des milliers de capteurs de vibrations, capables de détecter une perturbation sur toute la longueur de la canalisation.

Le document FR2935800 décrit un procédé de détection de fuites dans une conduite de liquide souterraine, en particulier une conduite d'eau, selon lequel : on injecte, par un diffuseur, un gaz dans le liquide de la conduite, gaz dont la teneur dans l'atmosphère est faible, et on parcourt en surface le trajet de la conduite avec un système de détection pour mesurer en des points successifs la teneur de l'air en gaz injecté, une teneur anormalement élevée constituant un indice de fuite.

Cette solution est à l'évidence extrêmement couteuse et très peu pratique.

Le document EP2710291 décrit un système pour identifier les fuites dans la construction de tuyaux pour liquides, composé d'au moins une unité de détection positionnée à proximité d'au moins un point de sortie de ladite construction de tuyaux et comprenant un capteur acoustique et une unité de communication sans fil, d'une unité de fermeture à commande électronique installée sur un point d'entrée de la construction de tuyaux, l'unité comprenant une vanne, un capteur acoustique et une unité de communication sans fil agencés pour transmettre des données de débit d'eau et recevoir des signaux de commande, et d'un dispositif de réseau de contrôleur pour recevoir les données de mesure de tous les capteurs. Le contrôleur est programmé pour détecter les fuites lorsqu'il identifie des différences entre le débit de liquide mesuré au point d'entrée et le débit mesuré aux points de sortie.

Le document WO2004/063623 décrit un procédé et un dispositif permettant de détecter des fuites éventuelles dans un pipeline. Le pipeline est surveillé en continu par des moyens de surveillance acoustiques, et les événements acoustiques indiquant une fuite éventuelle sont relevés. Le pipeline est également équipé de moyens de surveillance continue de la température, périodiquement ou sur demande. Selon cette solution, il est estimé qu'une fuite est probable lorsqu'un événement acoustique indique une fuite possible en un endroit et si, approximativement au même moment, une différence de température supérieure à une valeur prédéterminée est détectée entre cet endroit et les endroits adjacents. Dans cette solution, la température peut être surveillée par un satellite, un avion ou un drone.

Le document EP2028471 décrit un détecteur de fuite permettant une détection précise et stable de la présence et de la position d'une fuite dans une canalisation d'eau souterraine. Le détecteur de fuite comporte un détecteur de vibrations possédant un capteur incorporant un élément piézoélectrique, un corps principal du détecteur incorporant des amplificateurs de tension pour amplifier la tension d'un signal de sortie et plusieurs types d'unités d'élimination de bruit pour éliminer les bruits du signal de sortie et un écouteur. Le corps principal du détecteur possède une unité d'affichage pour afficher des données de sons détectés sur un écran prédéfini.

Ces solutions de l'art antérieur sont complexes à mettre en œuvre et ne permettent pas de détecter les fuites en peu de temps avec une grande précision. De plus, aucune de ces solutions ne se présente comme un dispositif portable simple d'utilisation et très peu encombrant pour faciliter l'intervention des techniciens de détection de fuites.

Le document AU2020262969A1 décrit un système de détection de signaux pour identifier des anomalies structurelles dans un réseau de pipelines, mais ne divulgue pas l'extraction de la DSF (caractéristique sensible aux défauts) ainsi que l'extraction du barycentre du périodogramme, ni l'étape d'analyse en composantes principales permettant de modéliser un signal normal de la canalisation et de détecter une éventuelle fuite en comparant le signal observé au signal normal.

Le document « CLARK CASEY ET A: "Wireless leak detection using airborne ultrasonics and a fast-Bayesian tree search algorithm with technology demonstration on the ISS" 2015 IEEE International Conference on Wireless for Space and Extreme Environments (WiSEE), IEEE, 14 December 2015 *»* se rapporte à un procédé de détection de fuite dans une canalisation qui utilise le périodogramme et qui est mis en œuvre par un dispositif portable comprenant un microphone. Ce document ne divulgue pas au moins l'extraction de la DSF et l'analyse ACP.

Le document *«* Toshitaka Sato, Akira Mita: "Leak detection using the pattern of sound signals in water supply systems", Proceedings volume 6529, sensors and smart structures technologies for Civil, Mechanical, and Aerospace systems 2007, Vol. 6529, 6 avril 2007 *»* se rapporte à une méthode de détection de fuites dans une canalisation qui se rapporte aux méthodes du modèle ACP et de la DSF. mais ne divulgue pas l'extraction des caractéristiques (barycentre et entropie) et la combinaison des résultats des caractéristiques extraites (entropie, DSF, et barycentre) et l'analyse ACP.

### PRÉSENTATION DE L'INVENTION

La présente invention vise à pallier les inconvénients de l'art antérieur exposés ci-avant et propose une solution simple d'utilisation permettant une détection automatique de fuite dans une canalisation en très peu de temps (moins d'une minute).

Un objectif principal de l'invention est de proposer un dispositif portable permettant de discriminer instantanément l'existence ou l'absence de fuite dans une canalisation avec une très grande acuité, pouvant atteindre 100% dans la plupart des cas.

Un autre objectif de l'invention est d'utiliser d'un ensemble d'intelligences artificielles pour optimiser la détection de fuites et la rendre discrète et rapide, et donc implémentable dans un ordinateur portable ou dans un téléphone mobile du type smartphone.

À cet effet, la présente invention a pour objet un procédé en accord avec la revendication 1 de détection électro-acoustique d'une fuite dans une canalisation acheminant un fluide, comprenant :
- une étape d'acquisition d'un signal sonore émis par la canalisation au moyen d'un microphone ; et
- une étape de traitement du signal en temps réel.

Pour un meilleur résultat, l'entropie du signal est calculée avec un modèle d'entropie approximative ApEn (*Approximate Entropy*).

Avantageusement, la caractéristique DSF est calculée à partir d'un modèle AR (autorégressif) du signal.

Plus particulièrement, le modèle AR du signal est un modèle intégré à moyenne ajustée ARIMA (*Auto-Regressive Integrated Moving Average*) présentant des coefficients ARIMA, et la caractéristique DSF est égale au rapport entre le premier coefficient ARIMA et la racine carrée de la somme des carrés des trois premiers coefficients ARIMA.

Selon un mode de réalisation avantageux, l'étape d'analyse ACP du signal met en œuvre des algorithmes d'intelligence artificielle, du type réseau de neurones, pour améliorer la détection de fuite en donnant un poids à chaque caractéristique calculée à l'étape d'extraction des caractéristiques. Il est à noter que les poids et les coefficients utilisés dans les calculs précédents sont optimisés par un algorithme génétique pour chaque application après une période d'apprentissage.

La présente invention a également pour objet un dispositif portable comprenant un microphone et des moyens de calcul sous forme de microprocesseur, pour la mise en œuvre d'un procédé de détection de fuite dans une canalisation tel que présenté. Avantageusement, le dispositif portable comprend un terminal mobile du type smartphone connecté au microphone, le procédé étant alors exécuté dans une application mobile dédiée.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif un mode de réalisation d'un procédé et d'un dispositif de détection de fuite dans une canalisation, conformes aux principes de l'invention.

### BRÈVE DESCRIPTION DES FIGURES

Les figures sont données à titre purement illustratif pour l'intelligence de l'invention et ne limitent pas la portée de celle-ci. Les différents éléments sont représentés de manière schématique et ne sont pas nécessairement à la même échelle. Sur l'ensemble des figures, les éléments identiques ou équivalents portent la même référence numérique.

Il est ainsi illustré en :
- Figure 1 : un dispositif portable de détection de fuite placé à proximité d'une canalisation, selon un premier mode de réalisation de l'invention ;
- Figure 2 : un organigramme des principales étapes d'un procédé de détection de fuite dans une canalisation selon l'invention ;
- Figure 3 : un dispositif portable de détection de fuite, selon un deuxième mode de réalisation de l'invention.

### DESCRIPTION DÉTAILLÉE DE MODES DE RÉALISATION

Dans le mode de réalisation décrit ci-après, on fait référence à un dispositif portable de détection de fuite dans une canalisation, destiné principalement à la recherche de fuite dans des conduites d'eau. Cet exemple, non limitatif, est donné pour une meilleure compréhension de l'invention et n'exclut pas l'utilisation du dispositif pour rechercher des fuites dans d'autres canalisations telles que les pipelines, gazoducs, oléoducs et plus généralement toutes circulations de fluides industriels dans les usines ou centrales.

Dans la présente description, le terme « dispositif portable » désigne un dispositif de taille réduite qu'un utilisateur peut porter avec ses mains en vue de son utilisation, à l'image d'un téléphone portable.

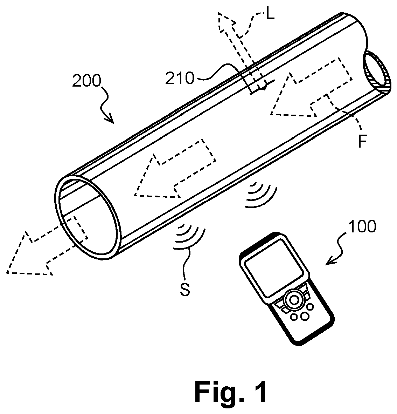

La figure 1 représente un dispositif portable 100 de détection de fuite placé à proximité d'une canalisation 200 dans laquelle s'écoule un fluide F suivant un sens normal d'écoulement (en flèches épaisses).

La canalisation 200 est sujette à une fuite L (en flèche mince) occasionnée notamment par un dommage tel qu'une fissure 210.

Naturellement, la fuite L induit une signature acoustique particulière dans le signal sonore S produit par le fluide qui s'écoule dans la canalisation 200.

Le dispositif portable 100 permet ainsi de sonder le signal sonore S émis par la canalisation 200 et de détecter la présence de la fuite L en reconnaissant la signature acoustique de celle-ci.

Préalablement à cette reconnaissance, un microphone intégré ou branché au dispositif portable 100 permet une acquisition du signal sonore S lorsqu'il est placé à proximité de la canalisation 200.

Bien entendu, la reconnaissance de la signature acoustique est le résultat d'un traitement du signal spécifique opéré par des moyens de calcul du dispositif portable 100.

Ainsi, le dispositif portable 100, grâce à son microphone et à ses moyens de calcul embarqués, met en œuvre un procédé de détection de fuite selon la présente invention.

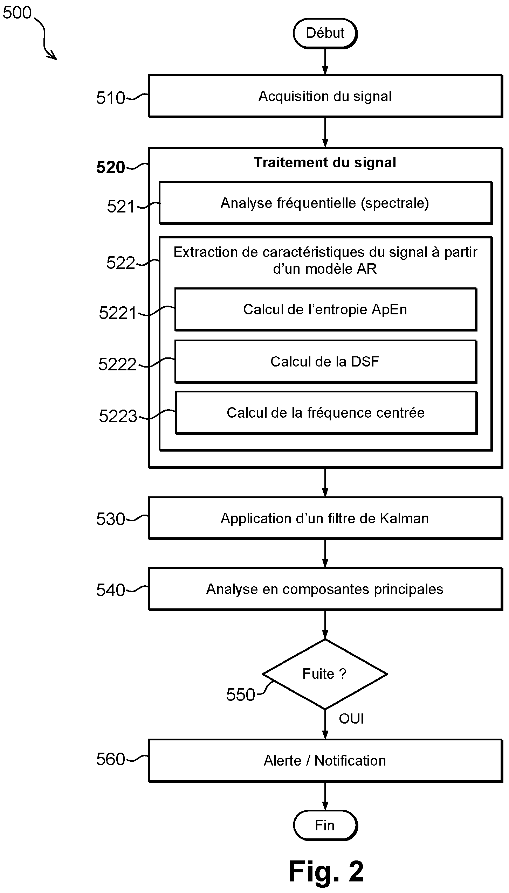

La figure 2 représente les principales étapes d'un procédé 500 de détection de fuite dans une canalisation, ledit procédé comprenant :
- une étape 510 d'acquisition du signal sonore émis par la canalisation ;
- une étape 520 de traitement de ce signal suivant une séquence d'opérations bien définies ;
- une étape 530 d'application d'un filtre de Kalman ;
- une étape 540 d'analyse en composantes principales ;
- une étape 550 de vérification de la présence de fuite ; et
- une étape conditionnelle 560 d'alerte et/ou de notification en cas de détection de fuite.

L'étape 510 d'acquisition du signal sonore consiste à enregistrer ce signal par le microphone du dispositif portable 100, à différents points accessibles de la canalisation.

Le signal est ensuite analysé dans une unité de traitement et de calcul du dispositif portable 100.

L'étape 520 de traitement du signal est réalisée suivant une approche fréquentielle sur le signal continu qu'est le signal sonore de la canalisation. Il s'agit d'un traitement numérique du signal réalisé en temps réel dans un microprocesseur embarqué, de préférence spécialisé dans le traitement numérique du signal.

Le traitement du signal effectué lors de l'étape 520 comprend :
- une étape 521 d'analyse fréquentielle du signal ; et
- une étape 522 d'extraction de caractéristiques du signal ;

L'étape 521 d'analyse fréquentielle consiste à obtenir une représentation fréquentielle du signal enregistré à l'aide d'un périodogramme (*periodogram*) afin d'en estimer la densité spectrale de puissance (DSP).

La DSP permet en effet dans le cadre de l'analyse harmonique de caractériser le signal aléatoire et stationnaire qu'est le signal sonore de la canalisation.

Cela permet d'identifier les harmoniques (ou fréquences fondamentales) du signal sonore, qui correspondent donc à un fonctionnement normal de la canalisation, et de retirer les sons extérieurs de l'environnement qui sont des sons parasites à la fuite recherchée.

L'étape 522 d'extraction de caractéristiques du signal consiste à calculer des caractéristiques à partir d'un modèle AR (autorégressif) du signal préalablement établi.

Cette extraction de caractéristiques comprend notamment un calcul 5221 de l'entropie, un calcul 5222 d'une caractéristique sensible aux défauts dite DSF (*Damage-Sensitive Feature*) et un calcul 5223 de la fréquence centrée (*centered frequency*) qui est le barycentre du périodogramme.

En effet, dès qu'il y a une anomalie dans le fonctionnement de la canalisation et que cette anomalie modifie le signal sonore résultant, il y a nécessairement plus de complexité dans ledit signal et donc plus d'entropie. Ainsi, l'entropie du signal sonore d'une canalisation avec fuite est nécessairement supérieure à celle du signal de la même canalisation sans fuite.

De préférence, l'entropie du signal enregistré est calculée avec le modèle statistique de l'entropie approximative ApEn (*Approximate Entropy*). Le modèle ApEn a permis d'obtenir de meilleurs résultats, comparé à d'autres modèles de calcul de l'entropie tels que l'entropie d'échantillon SampEn (*Sample Entropy*), qui est un modèle dérivé de ApEn, ou l'entropie de Kolmogorov-Sinai.

De plus, le modèle ApEn présente de nombreux avantages, notamment une faible consommation en calcul, un fonctionnement pour de petits échantillons de données, un fonctionnement en temps réel et un effet limité du bruit sur les mesures.

Le modèle AR du signal est de préférence un modèle autorégressif intégré à moyenne ajustée ARIMA (*Auto-Regressive Integrated Moving Average*) dont les coefficients ARIMA permettent de calculer la DSF qui est égale au ratio du premier coefficient et de la racine carrée de la somme des carrées des trois premiers coefficients.

Ainsi, les signaux normaux présentent des fréquences concentrées dans une même région, tandis que les signaux anormaux (avec fuite) ne présentent pas une telle concentration des fréquences.

Ensuite à partir de toutes ces caractéristiques, une analyse en composantes principales ACP et un filtre de Kalman sont appliqués, pour détecter et localiser une éventuelle fuite dans la canalisation.

L'étape 530 d'application d'un filtre de Kalman permet en effet d'estimer l'état du système représentant l'écoulement dans la canalisation, afin de générer les résidus du système, à partir d'un modèle de bon fonctionnement du système (sans fuite) et des mesures disponibles, ces résidus étant les signatures acoustiques révélatrices de la présence de fuite dans la canalisation.

L'étape 540 d'analyse ACP permet de générer un modèle ACP dans lequel toutes les corrélations entre les différentes caractéristiques sont prises en compte.

Ainsi, l'analyse ACP permet de modéliser le comportement de la canalisation (système) en fonctionnement normal, et les fuites (défauts) sont alors détectées en comparant le comportement observé dans le signal sonore enregistré et celui donné par le modèle ACP.

La combinaison des résultats des caractéristiques extraites à l'étape 520 et l'analyse ACP permet d'obtenir une segmentation d'un espace à deux dimensions dans lequel sont projetés les vecteurs d'un espace de dimension supérieure (5 par exemple) ayant pour base les caractéristiques extraites. Cette segmentation sépare les signaux sans fuite des signaux avec fuite et permet donc de détecter les fuites. De préférence, le procédé 500 met en œuvre des algorithmes d'intelligence artificielle du type réseaux de neurones pour améliorer l'analyse ACP en donnant un poids à chacune des caractéristiques calculées à l'étape 520. Il est à noter que les poids et les coefficients utilisés dans les calculs précédents sont optimisés par un algorithme génétique pour chaque application après une période d'apprentissage.

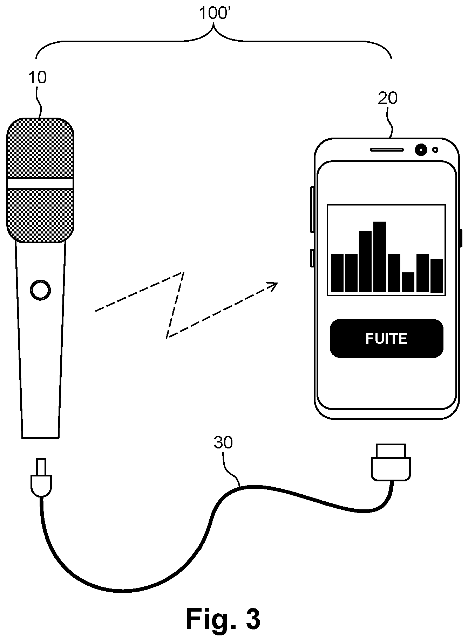

La figure 3 représente un dispositif portable 100', selon un autre mode de réalisation, pour la mise en œuvre du procédé de détection de fuite, ledit dispositif comprenant un microphone 10 détaché et un terminal mobile tel qu'un smartphone 20.

Le microphone 10 et le smartphone 20 peuvent être connectés avec un câble 30 ou par une liaison sans-fil.

Ainsi, le dispositif portable de détection de fuite peut simplement être transporté et utilisé par un technicien souhaitant vérifier l'état d'une canalisation.

Il ressort clairement de la présente description que certaines étapes du procédé peuvent être modifiées, remplacées ou supprimées et que certains ajustements peuvent être apportés à la mise en œuvre de ce procédé selon les objectifs visés, sans pour autant sortir du cadre de l'invention telle que définie par les revendications.

## Revendications

1. Procédé (500) de détection électro-acoustique d'une fuite dans une canalisation acheminant un fluide, comprenant :
- une étape (510) d'acquisition d'un signal sonore (S) émis par la canalisation au moyen d'un microphone (10) ; et
- une étape (520) de traitement du signal (S) en temps réel ;
**caractérisé en ce que** l'étape (520) de traitement du signal comprend :
- une étape (521) d'analyse fréquentielle du signal (S) au moyen d'un périodogramme permettant d'estimer la densité spectrale de puissance (DSP) dudit signal ; et
- une étape (522) d'extraction de caractéristiques du signal (S), dont l'entropie, une caractéristique sensible aux défauts dite DSF et une fréquence centrée correspondant au barycentre du périodogramme ;
**en ce qu'**il comprend, après les étapes ci-dessus :
- une étape (530) d'application d'un filtre de Kalman pour estimer des résidus correspondant à des signaux révélateurs de fuite, ces résidus étant les signatures acoustiques révélatrices de la présence de fuite dans la canalisation ;
- une étape (540) d'analyse en composantes principales permettant de modéliser un signal normal de la canalisation et de détecter une éventuelle fuite en comparant le signal (S) observé au signal normal ; et
- une étape (560) de présentation des résultats et d'alerte et/ou de notification en cas de détection d'une fuite ;
et **en ce qu'**il est entièrement mis en œuvre par un dispositif portable (100, 100') comprenant le microphone (10).

2. Procédé selon la revendication 1, dans lequel l'entropie du signal (S) est calculée avec un modèle d'entropie approximative.

3. Procédé selon la revendication 1 ou 2, dans lequel la caractéristique DSF est calculée à partir d'un modèle autorégressif du signal (S).

4. Procédé selon la revendication 3, dans lequel le modèle autorégressif du signal (S) est un modèle intégré à moyenne ajustée présentant des coefficients dits ARIMA, et la caractéristique DSF est égale au rapport entre le premier coefficient ARIMA et la racine carrée de la somme des carrés des trois premiers coefficients ARIMA.

5. Procédé selon l'une quelconque des revendications précédentes, dans lequel l'étape (540) d'analyse en composantes principales du signal (S) met en œuvre des algorithmes d'intelligence artificielle pour améliorer la détection de fuite en donnant un poids à chaque caractéristique calculée à l'étape (522) d'extraction des caractéristiques.

6. Procédé selon les revendications 4 et 5, dans lequel les poids et les coefficients utilisés dans les calculs sont optimisés par un algorithme génétique pour chaque mise en œuvre après une période d'apprentissage.

7. Dispositif portable (100, 100') comprenant un microphone (10) et des moyens de calcul sous forme de microprocesseur, pour la mise en œuvre d'un procédé (500) de détection de fuite dans une canalisation selon l'une des revendications 1 à 5.

8. Dispositif portable (100') selon la revendication 7, comprenant un terminal mobile du type smartphone (20) connecté au microphone (10), le procédé (500) étant exécuté dans une application mobile dédiée.

## Patentansprüche

1. Verfahren (500) zur elektroakustischen Erkennung eines Lecks in einer ein Fluid führenden Rohrleitung, umfassend:
- einen Schritt (510) der Erfassung eines von der Rohrleitung abgegebenen Schallsignals (S) mittels eines Mikrofons (10); und
- einen Schritt (520) der Verarbeitung des Signals (S) in Echtzeit;
**dadurch gekennzeichnet, dass** der Schritt (520) der Signalverarbeitung Folgendes umfasst:
- einen Schritt (521) der Frequenzanalyse des Signals (S) mittels eines Periodogramms, das es ermöglicht, die spektrale Leistungsdichte (PSD) des genannten Signals zu schätzen; und
- einen Schritt (522) der Extraktion von Merkmalen des Signals (S), darunter die Entropie, ein als DSF bezeichnetes fehlerempfindliches Merkmal und eine zentrierte Frequenz, die dem Schwerpunkt des Periodogramms entspricht;
dass es nach den vorstehenden Schritten Folgendes umfasst:
- einen Schritt (530) der Anwendung eines Kalman-Filters, um Residuen zu schätzen, die Signalen entsprechen, die auf ein Leck hinweisen, wobei diese Residuen die akustischen Signaturen sind, die das Vorhandensein eines Lecks in der Rohrleitung anzeigen;
- einen Schritt (540) einer Hauptkomponentenanalyse, der es ermöglicht, ein Normalsignal der Rohrleitung zu modellieren und ein mögliches Leck durch Vergleich des beobachteten Signals (S) mit dem Normalsignal zu erkennen; und
einen Schritt (560) der Darstellung der Ergebnisse und der Alarmierung und/oder Benachrichtigung im Falle der Erkennung eines Lecks; und dass es vollständig durch eine tragbare Vorrichtung (100, 100') ausgeführt wird, die das Mikrofon (10) umfasst.

2. Verfahren nach Anspruch 1, wobei die Entropie des Signals (S) mit einem Modell der approximativen Entropie berechnet wird.

3. Verfahren nach Anspruch 1 oder 2, wobei das DSF-Merkmal aus einem autoregressiven Modell des Signals (S) berechnet wird.

4. Verfahren nach Anspruch 3, wobei das autoregressive Modell des Signals (S) ein autoregressives integriertes Moving-Average-Modell mit als ARIMA bezeichneten Koeffizienten ist und das DSF-Merkmal gleich dem Verhältnis zwischen dem ersten ARIMA-Koeffizienten und der Quadratwurzel aus der Summe der Quadrate der ersten drei ARIMA-Koeffizienten ist.

5. Verfahren nach einem der vorhergehenden Ansprüche, wobei der Schritt (540) der Hauptkomponentenanalyse des Signals (S) Algorithmen der künstlichen Intelligenz einsetzt, um die Leckerkennung zu verbessern, indem jedem im Schritt (522) der Extraktion von Merkmalen berechneten Merkmal eine Gewichtung zugewiesen wird.

6. Verfahren nach den Ansprüchen 4 und 5, wobei die bei den Berechnungen verwendeten Gewichtungen und Koeffizienten für jede Durchführung nach einer Lernphase durch einen genetischen Algorithmus optimiert werden.

7. Tragbare Vorrichtung (100, 100'), umfassend ein Mikrofon (10) und Rechenmittel in Form eines Mikroprozessors, zur Durchführung eines Verfahrens (500) zur Leckerkennung in einer Rohrleitung nach einem der Ansprüche 1 bis 5.

8. Tragbare Vorrichtung (100') nach Anspruch 7, umfassend ein mobiles Endgerät vom Smartphone-Typ (20), das mit dem Mikrofon (10) verbunden ist, wobei das Verfahren (500) in einer dedizierten mobilen Anwendung ausgeführt wird.

## Claims

1. Method (500) for electro-acoustic detection of a leak in a pipeline conveying a fluid, comprising:
- a step (510) of acquiring a sound signal (S) emitted by the pipeline by means of a microphone (10); and
- a step (520) of processing the signal (S) in real time;
**characterised in that** the step (520) of processing the signal comprises:
- a step (521) of frequency analysis of the signal (S) by means of a periodogram allowing the power spectral density (PSD) of said signal to be estimated; and
- a step (522) of extracting features of the signal (S), including the entropy, a fault-sensitive feature referred to as DSF, and a centred frequency corresponding to the centroid of the periodogram;
**in that** it comprises, after the above steps:
- a step (530) of applying a Kalman filter to estimate residuals corresponding to signals indicative of a leak, said residuals being the acoustic signatures indicative of the presence of a leak in the pipeline;
- a step (540) of principal component analysis allowing a normal signal of the pipeline to be modelled and a possible leak to be detected by comparing the observed signal (S) with the normal signal; and
- a step (560) of presenting the results and of issuing an alert and/or a notification in the event of detection of a leak;
and **in that** it is entirely implemented by a portable device (100, 100') comprising the microphone (10).

2. Method according to claim 1, wherein the entropy of the signal (S) is calculated using an approximate entropy model.

3. Method according to claim 1 or 2, wherein the DSF feature is calculated from an autoregressive model of the signal (S).

4. Method according to claim 3, wherein the autoregressive model of the signal (S) is an autoregressive integrated moving average model having coefficients referred to as ARIMA coefficients, and the DSF feature is equal to the ratio between the first ARIMA coefficient and the square root of the sum of the squares of the first three ARIMA coefficients.

5. Method according to any one of the preceding claims, wherein the step (540) of principal component analysis of the signal (S) implements artificial intelligence algorithms for improving leak detection by assigning a weight to each feature calculated in the feature extraction step (522).

6. Method according to claims 4 and 5, wherein the weights and the coefficients used in the calculations are optimised by a genetic algorithm for each implementation after a learning period.

7. Portable device (100, 100') comprising a microphone (10) and computing means in the form of a microprocessor, for implementing a method (500) of leak detection in a pipeline according to one of claims 1 to 5.

8. Portable device (100') according to claim 7, comprising a mobile terminal of the smartphone type (20) connected to the microphone (10), the method (500) being executed in a dedicated mobile application.
